# EUROPEAN PATENT APPLICATION

(11) **EP 4 589 706 A2**
(43) Date of publication of application: **23.07.2025**
(21) Application number: 25150963.4
(22) Date of filing: 09.01.2025
(51) Int. Cl.: H01M 10/04

(54) **WINDING APPARATUS FOR LOW-VOLTAGE BATTERY MODULE STRUCTURE AND A METHOD OF USING THE SAME**

(30) Priority: 18.01.2024 CN 202410074906
(71) Applicant: Camel Group New Energy Battery Xiangyang Co., Ltd., Xiangyang City, Hubei 441000 (CN)
(72) Inventor: ZHANG, Xin, Xiangyang City, Hubei Province 441000 (CN); LU, Qingyou, Xiangyang City, Hubei Province 441000 (CN); LIU, Changlai, Xiangyang City, Hubei Province 441000 (CN); XIA, Shizhong, Xiangyang City, Hubei Province 441000 (CN); CHEN, Nian, Xiangyang City, Hubei Province 441000 (CN); ZHAO, Dan, Xiangyang City, Hubei Province 441000 (CN); XIE, Zhengan, Xiangyang City, Hubei Province 441000 (CN)
(74) Representative: Murgitroyd & Company

(57) **Abstract**

A winding apparatus for a low-voltage battery module structure and a method of using the same are provided. The low-voltage battery module structure includes battery cells, buffer pads, and tapes. The battery cells are lithium battery cells, and the buffer pads are made of flame-retardant foam or high-temperature insulation material that can effectively stop thermal runaway from spreading and reduce an expansion force at the end of the life of lithium batteries. The battery cells are stacked side by side, and every two adjacent battery cells are separated by one buffer pad to form a module. The tapes are wound around the module for fixation. The module structure is subjected to a certain pre-compressing force in the early stage of its life, and the buffer pads are compressed and adsorbs its expansion force at the end of its life, thereby greatly prolonging the service life of the lithium battery system.

## Description

### TECHNICAL FIELD

The present invention belongs to the field of module grouping technology, and in particular to a winding apparatus for low-voltage battery module structure and a method of using the same.

### BACKGROUND

Lithium ion power batteries have been widely used in the fields of new energy pure electric vehicles and hybrid new electric vehicles. Existing low-voltage lithium battery modules typically include end plates, side plates, and fastener connection structures, which are high in cost, heavy in weight, and difficult to manufacture. With the maturity of technology and the demand for lightweight, standardization, and low cost, in the face of the problems of complex grouping, high cost, heavy weight, and expansion failure of the existing low-voltage lithium battery modules, the proposed simplification of module processing procedures has put forward higher requirements for the service life and cost of low-voltage lithium batteries.

### SUMMARY

The purpose of the present invention is to overcome the above-mentioned shortcomings in the existing art and provide a method of using a winding apparatus for a low-voltage battery module structure, which is simple in module structure, low in cost, and simple in production process while prolonging the service life of the product.

The present invention further provides a winding apparatus.

The technical solution of the present invention is as follows: a method of using a winding apparatus for a low-voltage battery module structure, the low-voltage battery module structure including multiple battery cells, one or more buffer pads, and one or more tapes. The multiple battery cells are stacked side by side, and every two adjacent battery cells are separated by one of the buffer pads to form a module. The one or more tapes are wound around the module to form a battery module body. A carrier is located on the battery module body. Aluminum bars are integrated into the carrier, and the aluminum bars are connected to terminals of the battery cells through laser welding.

The winding apparatus includes a base plate, as well as two bases and a tape support arranged on the base plate. A driving motor is connected to the two bases through a transmission mechanism and a synchronization mechanism. One positioning claw is arranged at an inner side of each of the bases, and the positioning claw at the inner side of one of the bases is arranged opposite to the positioning claw at the inner side of another of the bases to form an accommodation chamber. One side of the module placed inside the accommodation chamber abuts against one positioning claw, and another side of the module placed inside the accommodation chamber abuts against another positioning claw. A hollow space formed in a middle part of the accommodation chamber is configured as an avoidance space for avoiding the tapes, and openings at upper ends of the two positioning claws are formed as an entrance to the accommodation chamber. The tape support is arranged corresponding to the avoidance space. Movable pressure plates are arranged at the openings at the upper ends of the positioning claws, and the movable pressure plates are connected to driving cylinders. Outer surfaces of the bases are mounted at one end of a stand through bearings, and a synchronization shaft is mounted at another end of the stand. Both ends of the synchronization shaft are connected to synchronization driving wheels. Synchronization driven wheels are arranged on the stand at the inner sides of the bearings. The synchronization driving wheels are in transmission connection to the synchronization driven wheels via synchronization belts. The synchronization mechanism is consisted of the synchronization shaft, the synchronization driving wheels, the synchronization driven wheels, and the synchronization belts. The transmission mechanism includes a driving gear connected to a motor shaft of the driving motor, a transmission belt, a driven gear connected to the driving gear via the transmission belt. The driven gear is mounted at an end, close to the driving motor, of the synchronization shaft.

In case that the pressure plates are driven by the driving cylinders to rotate to outside the openings at the upper ends of the positioning claws, the entrance of the accommodation chamber is in an open state, and the module is mounted into the accommodation chamber through the entrance. In case that the pressure plates are rotated to above the openings at the upper ends of the positioning claws, the pressure plates are driven by the driving cylinders to press down on the module inside the accommodation chamber until the pressure plates are in contact with upper end faces of the positioning claws, and the module is in a pre-compressed state.

Ends of the tapes on the tape support is adhered to a surface of the module, the driving motor rotates and drives the accommodation chamber and the module inside the accommodation chamber to rotate through the transmission mechanism and the synchronization mechanism, the tapes are automatically wound around the surface of the module for more than one turn, and the module is compressed by the tapes.

The positioning claws are each of a groove-shaped structure including a bottom plate, a middle upright plate, and side upright plates standing on two sides of the middle upright plate. Openings are formed at the upper and inner sides of the groove-shaped structure, and areas at two sides of protrusions on inner surfaces of the middle upright plates are formed as avoidance parts for avoiding terminals of the module.

The two positioning claws are separated from each other by a distance A to form a hollow space in the middle part of the accommodation chamber.

The number of winding turns of the tapes is in a range of 1 to 20. The tapes are configured as a single wide tape wound around the middle part of the outer surface of the module, or multiple thin tapes evenly arranged at the upper and lower parts of the outer surface of the module. The tapes each have a thickness of 0.1 mm to 2 mm and a width of 5 mm to 300 mm.

The buffer pads are made of insulating flame-retardant material, a thickness of each of the buffer pads is 0.2 mm to 5 mm, and the length and width of each of the buffer pads fit with a size of each of the battery cells.

The buffer pads are configured as foam pads, aerogel pads, or fireproof blankets.

The stand includes two opposing brackets, and bottoms of the brackets are bolted onto the base plate.

The winding apparatus includes a base plate, as well as two bases and a tape support arranged on the base plate. A driving motor is connected to the two bases through a transmission mechanism and a synchronization mechanism. One positioning claw is arranged at an inner side of each of the bases, and the positioning claw at the inner side of one of the bases is arranged opposite to the positioning claw at the inner side of another of the bases to form an accommodation chamber. One side of the module placed inside the accommodation chamber abuts against one positioning claw, and another side of the module placed inside the accommodation chamber abut against another positioning claw. A hollow space formed in a middle part of the accommodation chamber is configured as an avoidance space for avoiding the tapes, and openings at upper ends of the two positioning claws are formed as an entrance to the accommodation chamber. The tape support is arranged corresponding to the avoidance space. Movable pressure plates are arranged at the openings at the upper ends of the positioning claws, and the movable pressure plates are connected to driving cylinders. Outer surfaces of the bases are mounted at one end of a stand through bearings, and a synchronization shaft is amounted at another end of the stand. Both ends of the synchronization shaft are connected to synchronization driving wheels. Synchronization driven wheels are arranged on the stand at the inner sides of the bearings. The synchronization driving wheels are in transmission connection to the synchronization driven wheels via synchronization belts. The synchronization mechanism is consisted of the synchronization shaft, the synchronization driving wheels, the synchronization driven wheels, and the synchronization belts. The transmission mechanism includes a driving gear connected to a motor shaft of the driving motor, a transmission belt, a driven gear in transmission connection to the driving gear via the transmission belt. The driven gear is mounted at an end, close to the driving motor, of the synchronization shaft. In case that the pressure plates are driven by the driving cylinders to rotate to outside the openings at the upper ends of the positioning claws, the entrance of the accommodation chamber is in an open state, and the module is mounted in the accommodation chamber through the entrance. In case that the pressure plates are rotated to above the openings at the upper ends of the positioning claws, the pressure plates are driven by the driving cylinders to press down on the module until the pressure plates are in contact with upper end faces of the positioning claws, and the module is in a pre-compressed state. Ends of the tapes on the tape support are adhered to a surface of the module, the motor rotates and drives the accommodation chamber and the module inside the accommodation chamber to rotate through the transmission mechanism and the synchronization mechanism, the tapes are automatically wound on the surface of the module for more than one turn, and the module is compressed by the tapes.

The module structure in the present invention mainly solves the problems of complex grouping, high cost, heavy weight, and expansion failure of the existing low-voltage lithium battery modules. In the technical solution of the present invention, the buffer pads are arranged between the battery cells and the tapes are wound. The module structure of the present invention is subjected to a certain pre-compressing force in the early stage of its life, and the buffer pads are compressed and adsorbs its expansion force at the end of its life, thereby greatly prolonging the service life of the lithium battery module structure (i.e. module structure) system. In the module structure of the present invention, the traditional module end plates, side plates, and fastener connection structures are removed, making the structure simple, reducing processing procedures, reducing investment in production equipment, making it easy to achieve automation and large-scale production, thereby greatly reducing product costs and weight, and greatly improving the production efficiency and market competitiveness of lithium battery products.

In the method of the present invention, foams are arranged between battery cells and high-performance tapes are wound around the battery cells for grouping, which is light in weight, low in cost, simple in process, and easier to achieve standardization and automation production while ensuring the life and performance of the battery. In the winding apparatus of the present invention, the battery cells to be wound are automatically rotated on the base by the driving motor, which can efficiently and quickly complete the winding of the battery cells and is convenient to use. It is ensured that the module produced through the winding apparatus of the present invention is subjected to a certain initial pre-compressing force, and the expansion force produced by the battery cells can be absorbed at the end of its life, thereby ensuring that the lithium battery system can work in an ideal range of the pre-compressing force throughout its entire life cycle, greatly prolonging the service life of the product.

### BRIEF DESCRIPTION OF THE DRAWINGS

In order to provide a clearer explanation of the technical solution in the embodiments of the present invention, a brief introduction will be given to the accompanying drawings required for the description of the embodiments. It is obvious that the drawings described below are only some embodiments of the present invention. For those skilled in the art, other drawings can be obtained based on these drawings without creative labor.
FIG. 1 is a schematic diagram of the structure of the low-voltage battery module structure of the present invention.
FIG. 2 is an exploded schematic diagram of the low-voltage battery module structure of the present invention.
FIG. 3 is an assembly schematic diagram of the low-voltage battery module structure of the present invention.
FIG. 4 is a first schematic diagram of the structure of the winding apparatus for the low-voltage battery module structure of the present invention.
FIG. 5 is a second schematic diagram of the structure of the winding apparatus for the low-voltage battery module structure of the present invention.
FIG. 6 is an enlarged partial view of FIG. 5.

### DETAILED DESCRIPTION

The following will provide a clear and complete description of the technical solution of the present invention in conjunction with specific embodiments. Obviously, the described embodiments are only a part of the embodiments of the present invention, not all embodiments. Based on the embodiments of the present invention, all other embodiments obtained by ordinary skilled persons in the art without creative labor are within the scope of protection of the present invention.

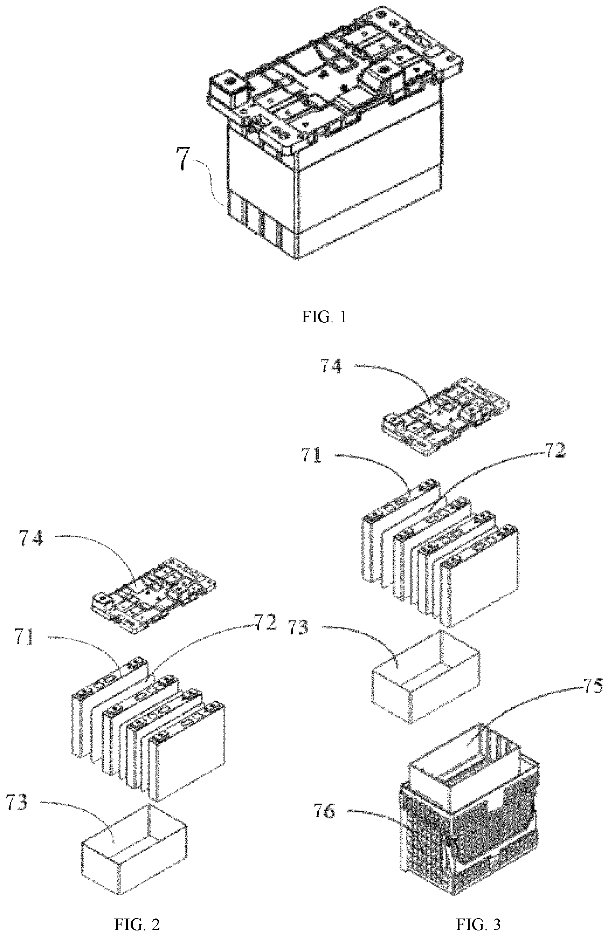

In FIG. 1 to FIG. 3, a module structure 7 of the present invention includes multiple battery cells 71, one or more buffer pads 72, one or more tapes 73, and a carrier (Cells Contact System, CCS) 74. The battery cells 71 are lithium battery cells, and the buffer pads 72 are made of flame-retardant foam or high-temperature insulation material that can effectively stop thermal runaway from spreading and reduce an expansion force at the end of the life of lithium batteries. The multiple battery cells 71 are stacked side by side, and every two adjacent battery cells 71 are separated by one of the buffer pads 72 to form a module. One or more tapes are wound around the module for fixation. Aluminum bars, components for temperature acquisition, and components for voltage acquisition are integrated into the carrier 74. The aluminum bars are welded to terminals of the battery cells of the module to form a battery system. The aluminum bars integrated into the carrier 74 can be configured as positive and negative interfaces for current output and input of the module. The integrated components for temperature acquisition and voltage acquisition can be configured for acquisition and transmission of temperature and voltage signals.

The battery cells 71 are generally lithium battery cells with square shells, and the number of the battery cells of the module can be 1 to 20. The buffer pads 72 are made of insulating flame-retardant material with certain compressibility under an external force, such as foam pads, aerogel pads, or fireproof blankets. A thickness of each of the buffer pads is 0.2 mm to 5 mm, and a length and width of each of the buffer pads fit a size of each of the battery cells. The tapes 73 are a kind of tape with high strength and high toughness. A thickness of each of the tapes is 0.1 mm to 2 mm and a width of each of the tapes is 5 mm to 300 mm. The number of winding turns of the tapes is one to twenty. The module is wound with the tapes under compressing of an external force, and the external force is in a range of 5 N to 3000 N. An initial pre-compressing force applied on the module is in a range of 1 N to 2500 N. The tapes 73 can be configured as a single wide tape wound around a middle part of the module, or multiple narrow tapes evenly arranged at the upper and lower parts of the outer surface of the module to ensure a uniform pre-compressing force is applied on the module. The lower part of the module is generally connected and fixed to a box body 76 through structural adhesive 75 with high strength.

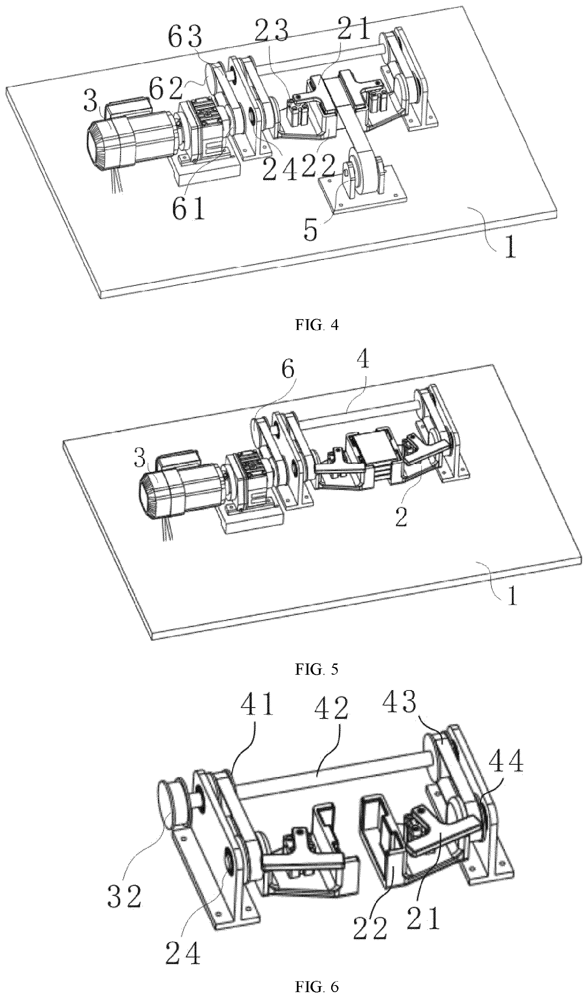

In FIG. 4 to FIG. 6, bases 2 and a tape support 5 are arranged on a base plate 1. A driving mechanism 3 is connected to the bases 2 through a transmission mechanism 6 and a synchronization mechanism 4. Positioning claws on inner sides of the two bases 2 are arranged opposite to each other to form an accommodation chamber. A hollow space formed in a middle part of the accommodation chamber is configured as an avoidance space for avoiding the tapes 73, and openings at upper ends of the two positioning claws are formed as an entrance to the accommodation chamber. The entrance is cooperative with movable pressure plates 21. Outer surfaces of the bases 2 are mounted at one end of a stand through bearings 31, and a synchronization shaft 42 is mounted at another end of the stand. Inner sides of the left and right ends of the synchronization shaft 42 are connected to synchronization driving wheels 41. Synchronization driven wheels 44 are arranged on the stand at inner sides of the bearings 24. The synchronization driving wheels 41 are in transmission connection to the synchronization driven wheels 44 via synchronization belts 43. The movable pressure plates 21 and driving cylinders 23 for driving movement of the movable pressure plates 21 are arranged at upper part of the accommodation chamber at both left and right sides. The tape support 5 is arranged corresponding to the avoidance space. The synchronization mechanism 4 is consisted of the synchronization shaft 42, the synchronization driving wheels 41, the synchronization driven wheels 44, and the synchronization belts 43. The stand includes two opposing brackets, and bottoms of the brackets are bolted onto the base plate 1. The driving mechanism 3 can be, for example, a driving motor.

The transmission mechanism 6 includes a driving gear 61 connected to a motor shaft of the driving mechanism 3, a transmission belt 63, and a driven gear 62 in transmission connection to the driving gear 61 via the transmission belt 63. The driven gear 62 is mounted on an outer side of a right end of the synchronization shaft 42.

### During winding,

1. In case that the pressure plates 21 are driven by the driving cylinders 23 to rotate to outside the openings at the upper ends of the positioning claws, the entrance of the accommodation chamber is in an open state, and the module is mounted into the accommodation chamber through the entrance. In case that the pressure plates 21 are driven by the driving cylinders 23 to rotate to above the openings at the upper ends of the positioning claws, the pressure plates 21 are driven by the driving cylinders to press down on the module inside the accommodation chamber until the pressure plates 21 are in contact with upper end faces of the positioning claws, and the module is in a pre-compressed state.
2. Ends of the tapes on the tape support 5 are adhered to a surface of the module, the driving mechanism 3 rotates and drives the accommodation chamber and the module inside the accommodation chamber to rotate through the transmission mechanism 6 and synchronization mechanism, the tapes are automatically wound around the module for more than one turn, and the module is compressed by the tapes.

Finally, it should be noted that the above description is only a preferred embodiment of the present invention and is not intended to limit the present invention. Although the present invention has been described in detail with reference to the aforementioned embodiments, those skilled in the art can still modify the technical solutions described in the aforementioned embodiments or equivalently substitute some of the technical features. Any modifications, equivalent substitutions, improvements, etc. made within the spirit and principles of the present invention should be included within the scope of protection of the present invention.

## Claims

1. A winding apparatus for a low-voltage battery module structure (7), **characterized in that** the winding apparatus comprises a base plate (1), two bases (2), a driving mechanism (3), a synchronization mechanism (4), and a transmission mechanism (6), the driving mechanism (3) is connected to the two bases (2) through the transmission mechanism (6) and the synchronization mechanism (4);
wherein two positioning devices are arranged at inner sides of the two bases (2), the two positioning devices are arranged opposite to each other to form an accommodation chamber for accommodating the low-voltage battery module structure (7), a hollow space in a middle part of the accommodation chamber is configured as an avoidance space for avoiding a tape, the accommodation chamber and the low-voltage battery module structure (7) inside the accommodation chamber are driven to rotate by the driving mechanism (3) through the transmission mechanism (6) and the synchronization mechanism (4); and
wherein two movable pressure plates (21) are arranged at openings at upper ends of the two positioning devices (22), the two movable pressure plates (21) are configured to rotate between a first position where the two movable pressure plates (21) are located outside the openings at the upper ends of the two positioning devices (22) and a second position where the two movable pressure plates (21) are located above the openings at the upper ends of the two positioning devices (22); and the two movable pressure plates (21), at the second position, are driven to press down on the low-voltage battery module structure (7) inside the accommodation chamber until the two movable pressure plates (21) are in contact with upper end faces of the two positioning devices (22), so that the low-voltage battery module structure (7) is in a pre-compressed state.

2. The winding apparatus according to claim 1, wherein the two bases (2) comprises a first base (2) and a second base (2),
the first base (2) comprises a first positioning device (22), a first driving cylinder (23) arranged on the first positioning device (22), and a first movable pressure plate (21) arranged on the first driving cylinder (23) and is pivotable relative to the first driving cylinder (23),
the second base (2) comprises a second positioning device (22), a second driving cylinder (23) arranged on the second positioning device (22), and a second movable pressure plate (21) arranged on the second driving cylinder (23) and is pivotable relative to the second driving cylinder (23),
the first positioning device (22) and the second positioning device (22) are disposed opposite to each other to form the accommodation chamber, and the first positioning device (22) and the second positioning device (22) are separated by a first distance to form the avoidance space.

3. The winding apparatus according to claim 2, wherein
the first positioning device (22) comprises a first platform and a first accommodation member extending from the first platform, the first driving cylinder (23) is arranged on the first platform, and
the second positioning device (22) comprises a second platform and a second accommodation member extending from the second platform, the second driving cylinder (23) is arranged on the second platform.

4. The winding apparatus according to claim 3, wherein
the first accommodation member comprises a first lower plate, a first middle vertical plate and two first side vertical plates, the first middle vertical plate and the two first side vertical plates are extended from the first lower plate along a same direction, and the two first side vertical plates are arranged at two sides of the first middle vertical plate, a first groove-shaped structure is formed by the enclosure of the first lower plate, the first middle vertical plate and the two first side vertical plates, and a top of the first groove-shaped structure is opened; and
the second accommodation member comprises a second lower plate, a second middle vertical plate and two second side vertical plates, the second middle vertical plate and the two second side vertical plates are extended from second lower plate along a same direction, and the two second side vertical plates are arranged at two sides of the second middle vertical plate, a second groove-shaped structure is formed by the enclosure of the second lower plate, the second middle vertical plate and the two second side vertical plates, and a top of the second groove-shaped structure is opened.

5. The winding apparatus according to claim 4, wherein
a first projection is arranged on one side of the first middle vertical plate, and a space for accommodating a pole of the low-voltage battery module structure (7) is formed between the first projection and the first side vertical plate; and
a second projection is arranged on one side of the second middle vertical plate, and a space for accommodating a pole of the low-voltage battery module structure (7) is formed between the second projection and the second side vertical plate.

6. The winding apparatus according to claim 4, wherein
the first movable pressure plate (21) comprises a first lateral pressure plate and a first vertical pressure plate integrally formed with the first lateral pressure plate, a combination of the first lateral pressure plate and the first vertical pressure plate is in a "T" shape, and one end of the first lateral pressure plate is connected to the first driving cylinder (23); and
the second movable pressure plate (21) comprises a second lateral pressure plate and a second vertical pressure plate integrally formed with the second lateral pressure plate, a combination of the second lateral pressure plate and the second vertical pressure plate is in a "T" shape, and one end of the second lateral pressure plate is connected to the second driving cylinder (23).

7. The winding apparatus according to claim 6, wherein
the first vertical pressure plate is configured to be in a same size as a top of the first groove-shaped structure; and
the second vertical pressure plate is configured to be in a same size as a top of the second groove-shaped structure.

8. The winding apparatus according to claim 4, wherein
the first distance is configured to be smaller than a width of the low-voltage battery module structure (7) and larger than a width of the tape.

9. The winding apparatus according to claim 1, wherein the winding apparatus further comprises a stand, the stand comprises a first bracket and a second bracket that are disposed opposite to each other, the first base (2) and the second base (2) are arranged between the first bracket and the second bracket.

10. The winding apparatus according to claim 9, wherein the synchronization mechanism (4) comprises:
a first synchronization driven wheel (44) and a second synchronization driven wheel (44) that are disposed opposite to each other, wherein the first synchronization driven wheel (44) is arranged on a side, facing the second bracket, of the first bracket, and is connected to the first base (2), the second synchronization driven wheel (44) is arranged on a side, facing the first bracket, of the second bracket, and is connected to the second base (2),
a first synchronization driving wheel (41) and a second synchronization driving wheel (41) that are disposed opposite to each other, wherein the first synchronization driving wheel (41) is arranged on a side, facing the second bracket, of the first bracket, and is disposed at an interval with the first synchronization driven wheel (44), the second synchronization driving wheel (41) is arranged on a side, facing the second bracket, of the first bracket, and is disposed at an interval with the second synchronization driven wheel (44),
a first synchronization belt (43) and a second synchronization belt (43), wherein the first synchronization driving wheel (41) is connected to the first synchronization driven wheel (44) through the first synchronization belt (43), the second synchronization driving wheel (41) is connected to the second synchronization driven wheel (44) through the second synchronization belt (43); and
a synchronization shaft (42), wherein the first synchronization driving wheel (41) is connected to the second synchronization driving wheel (41) through the synchronization shaft (42), a first end of the synchronization shaft (42) protrudes from a side, away from the second bracket, of the first bracket through the first synchronization driving wheel (41).

11. The winding apparatus according to claim 1, wherein the transmission mechanism (6) comprises:
a driving gear (61) being connected to the driving mechanism (3),
a driven gear (62) being connected to the first end of the synchronization shaft (42), and
a transmission belt (63), the driving gear (61) being connected to the driven gear (62) through the transmission belt (63).

12. The winding apparatus according to claim 1, wherein the driving mechanism (3) is a driving motor.

13. The winding apparatus according to claim 9, wherein a bottom of the first bracket and a bottom of the second bracket are bolted onto the base plate (1).

14. The winding apparatus according to claim 1, wherein the winding apparatus further comprises a tape support (5), the tape support (5) comprises a support base and a tape support member on the support base and used for winding the tape, and the tape support (5) is arranged so that the tape is aligned with the avoidance space.

15. A method of using a winding apparatus for a low-voltage battery module structure according to any one of claims 1 to 14, **characterized in that** the winding method comprises steps of:
in case that the two movable pressure plates (21) are driven to rotate to the first position, placing the low-voltage battery module structure (7) in the accommodation chamber through the openings,
in case that the two movable pressure plates (21) are driven to rotate to the second position, driving the two movable pressure plates (21) to press down on the low-voltage battery module structure (7) inside the accommodation chamber until the two movable pressure plates (21) are in contact with upper end faces of the two positioning devices (22) to render the low-voltage battery module structure (7) in a pre-compressed state,
adhering an end of the tape to a surface of the low-voltage battery module structure (7), driving the accommodation chamber and the low-voltage battery module structure (7) inside the accommodation chamber to rotate through the driving mechanism (3), the transmission mechanism (6), and the synchronization mechanism (4), and winding the tape on the surface of the low-voltage battery module structure (7) for more than one turn.
